(19) **Europäisches Patentamt**
**European Patent Office**
**Office européen des brevets**

(11) **EP 4 657 977 A2**

(12) **EUROPEAN PATENT APPLICATION**

(43) Date of publication:
**03.12.2025 Bulletin 2025/49**

(21) Application number: **25202496.3**

(22) Date of filing: **30.10.2019**

(51) International Patent Classification (IPC):
**H04W 88/04** (2009.01)

(52) Cooperative Patent Classification (CPC):
**H04W 72/543; H04W 72/40;** H04W 88/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2018 EP 18203892**

(62) Document number(s) of the earlier application(s) in accordance with Art. 76 EPC:
**19794161.0 / 3 874 871**

(71) Applicant: **Koninklijke Philips N.V.**
**5656 AG Eindhoven (NL)**

(72) Inventors:
• **ROTH-MANDUTZ, Elke**
**Eindhoven (NL)**

• **HASSAN HUSSEIN, Khaled Shawky**
**Eindhoven (NL)**
• **BHADAURIA, Shubhangi**
**Eindhoven (NL)**
• **LEYH, Martin**
**Eindhoven (NL)**

(74) Representative: **Philips Intellectual Property & Standards**
**High Tech Campus 52**
**5656 AG Eindhoven (NL)**

Remarks:
This application was filed on 16-09-2025 as a divisional application to the application mentioned under INID code 62.

(54) **SIDELINK RESOURCE POOL/BWP ALLOCATION BASED ON QOS**

(57) A wireless communication system includes a plurality of user devices, UE. At least some of the UEs are configured for a sidelink communication. The wireless communication system is configured to provide resources for the sidelink communication among the UEs, the resources comprising a plurality of sets of resources or resource pools, RPs. The plurality of sets of resources or RPs includes at least a first set of resources or RP and a second set of resources or RP, the first set of resources or RP to be used for a transmission over the sidelink of a first message having a first Quality-of-Service, QoS, class, and the second set of resources or RP to be used for a transmission over the sidelink of a second message having a second QoS class, the first QoS class and the second QoS class being different.

Fig. 3

**Description**

The present invention relates to field of wireless communication networks or systems, more specifically to enhancements or improvements regarding a communication over a sidelink. Embodiments of the present invention concern different approaches for allocating resources for a sidelink communication based on quality of service, QoS, requirements associated with a communication over the sidelink.

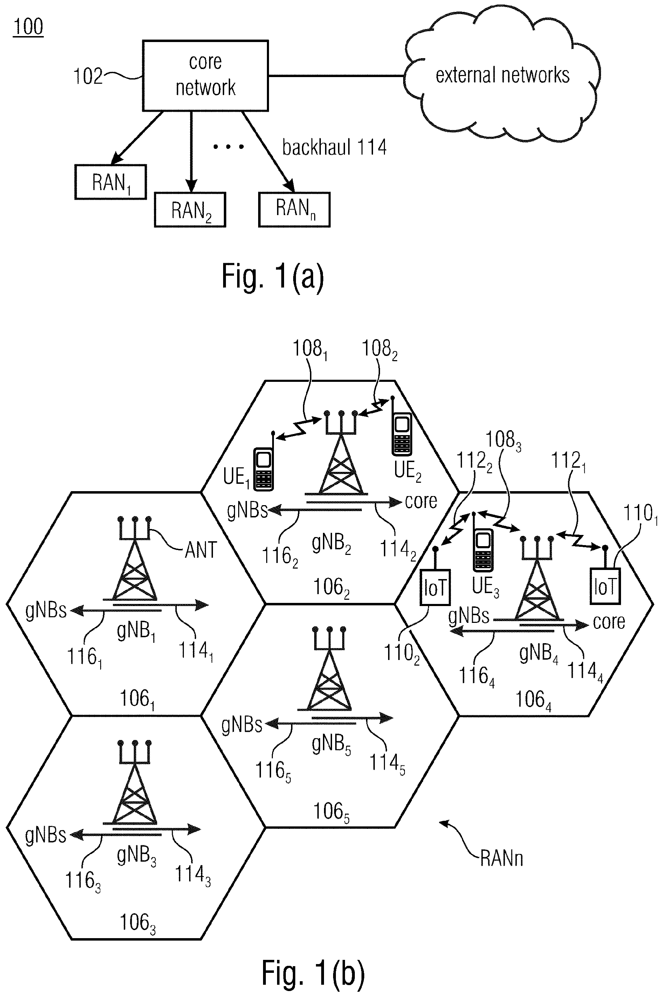

Fig. 1 is a schematic representation of an example of a terrestrial wireless network 100 including, as is shown in Fig. 1(a), a core network 102 and one or more radio access networks $RAN_1$, $RAN_2$, ...$RAN_N$. Fig. 1(b) is a schematic representation of an example of a radio access network $RAN_n$ that may include one or more base stations $gNB_1$ to $gNB_5$, each serving a specific area surrounding the base station schematically represented by respective cells $106_1$ to $106_5$. The base stations are provided to serve users within a cell. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RAN, may include more or less such cells, and $RAN_n$ may also include only one base station. Fig. 1(b) shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. Further, Fig. 1(b) shows two IoT devices $110_1$ and $110_2$ in cell $106_4$, which may be stationary or mobile devices. The IoT device $110_1$ accesses the wireless communication system via the base station $gNB_4$ to receive and transmit data as schematically represented by arrow $112_1$. The IoT device $110_2$ accesses the wireless communication system via the user $UE_3$ as is schematically represented by arrow $112_2$. The respective base station $gNB_1$ to $gNB_5$ may be connected to the core network 102, e.g. via the S1 interface, via respective backhaul links $114_1$ to $114_5$, which are schematically represented in Fig. 1(b) by the arrows pointing to "core". The core network 102 may be connected to one or more external networks. Further, some or all of the respective base station $gNB_1$ to $gNB_5$ may connected, e.g. via the S1 or X2 interface or the XN interface in NR, with each other via respective backhaul links $116_1$ to $116_5$, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI). For the uplink, the physical channels may further include the physical random access channel (PRACH or RACH) used by UEs for accessing the network once a UE synchronized and obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length. Each subframe may include two slots of 6 or 7 OFDM symbols depending on the cyclic prefix (CP) length. A frame may also include of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced Pro standard or the 5G or NR, New Radio, standard.

The wireless network or communication system depicted in Fig. 1 may by a heterogeneous network having distinct overlaid networks, e.g., a network of macro cells with each macro cell including a macro base station, like base station $gNB_1$ to $gNB_5$, and a network of small cell base stations (not shown in Fig. 1), like femto or pico base stations.

In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the 5G or NR, new radio, standard.

In mobile communication networks, for example in a network like that described above with reference to Fig. 1, like an LTE or 5G/NR network, there may be UEs that communicate directly with each other over one or more sidelink (SL) channels, e.g., using the PC5 interface. UEs that communicate directly with each other over the sidelink may include vehicles communicating directly with other vehicles (V2V communication), vehicles communicating with other entities of the wireless communication network (V2X communication), for example roadside entities, like traffic lights, traffic signs, or pedestrians. Other UEs may not be vehicular related UEs and may comprise any of the above-mentioned devices. Such devices may also communicate directly with each other (D2D communication) using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are not within one of the cells depicted in Fig. 1, rather, it means that these UEs

- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs
- may be connected to the base station, that may not support NR V2X services, e.g. GSM, UMTS, LTE base stations.

When considering two UEs directly communicating with each other over the sidelink, e.g. PC5, one of the UEs may also be connected with a BS, and may relay information from the BS to the other UE via the sidelink interface. The relaying may be performed in the same frequency band (in-band-relay) or using another frequency band (out-of-band relay). In the first case, communication on the Uu and on the sidelink may be decoupled using different time slots as in time division duplex (TDD) systems.

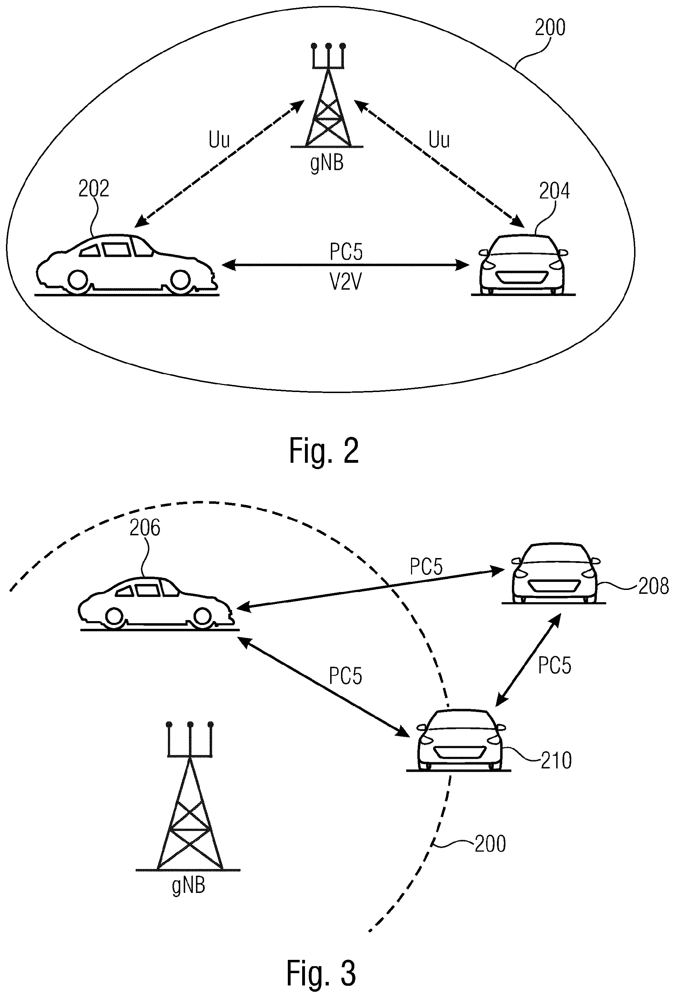

Fig. 2 is a schematic representation of an in-coverage scenario in which two UEs directly communicating with each other are both connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204 both in the coverage area 200 of the base station gNB. Both vehicles 202, 204 are connected to the base station gNB and, in addition, they are connected directly with each other over the PC5 interface. The scheduling and/or interference management of the V2V traffic is assisted by the gNB via control signaling over the Uu interface, which is the radio interface between the base station and the UEs. In other words, the gNB provides SL resource allocation configuration or assistance for the UEs, and the gNB assigns the resources to be used for the V2V communication over the sidelink. This configuration is also referred to as a mode 1 configuration in NR V2X or as a mode 3 configuration in LTE V2X.

Fig. 3 is a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance. Three vehicles 206, 208 and 210 are shown directly communicating with each other over a sidelink, e.g., using the PC5 interface. The scheduling and/or interference management of the V2V traffic is based on algorithms implemented between the vehicles. This configuration is also referred to as a mode 2 configuration in NR V2X or as a mode 4 configuration in LTE V2X. As mentioned above, the scenario in Fig. 3 which is the out-of-coverage scenario does not necessarily mean that the respective mode 4 UEs are outside of the coverage 200 of a base station, rather, it means that the respective mode 4 UEs are not served by a base station, are not connected to the base station of the coverage area, or are connected to the base station but receive no SL resource allocation configuration or assistance from the base station. Thus, there may be situations in which, within the coverage area 200 shown in Fig. 2, in addition to the mode 3 UEs 202, 204 also mode 4 UEs 206, 208, 210 are present.

Yet another scenario is called a "partial coverage" scenario, in accordance with which one of the two UEs which communicate with each other over the sidelink, is served by a base station, while the other UE is not served by the base station.

In the above-described scenarios of vehicular user devices, UEs, a plurality of such user devices may form a user device group, also referred to simply as group, and the communication within the group or among the group members may be performed via the sidelink interfaces between the user devices, like the PC5 interface. Within the wireless communication network or within a cell thereof, a plurality of such groups may exist at the same time. While it is noted that the communication within the group is via sidelink communication, in case the group or at least some group members thereof are in-coverage, this does not exclude that also some or all of the group members communicate with other entities outside the group via the base station or via the sidelink. For example, the above-described scenarios using vehicular user devices may be employed in the field of the transport industry in which a plurality of vehicles being equipped with vehicular user devices may be grouped together, for example, by a remote driving application.

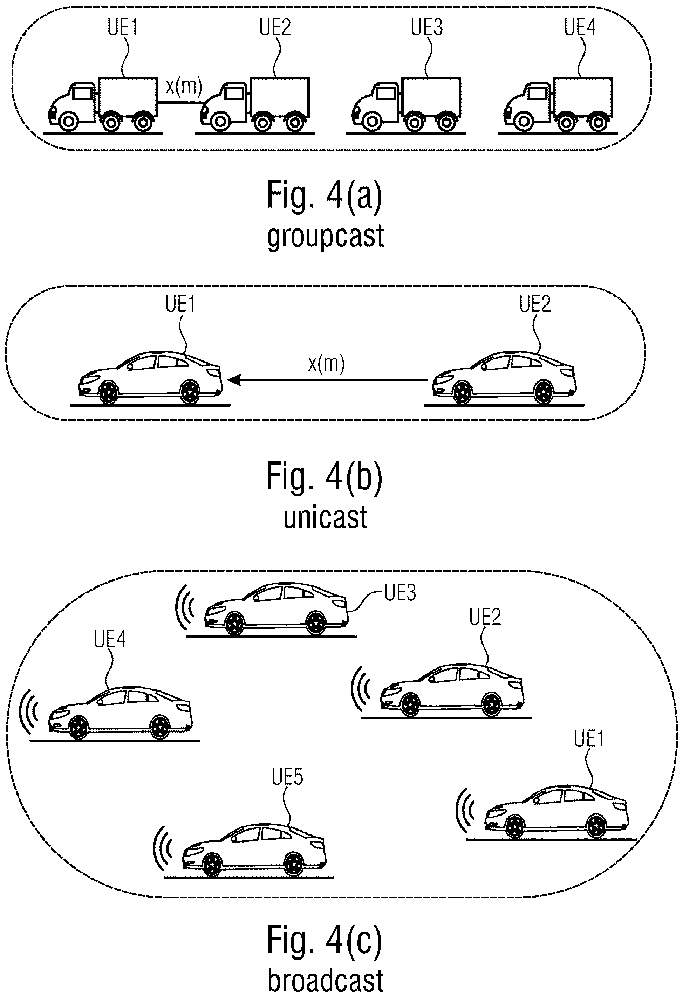

There may be different types of communication on the sidelink. For example, in V2X scenarios there may be three communication types, namely broadcast, groupcast and unicast. Fig. 4 illustrates the different types of communication on the sidelink for a V2X communication:

- The groupcast, depicted in Fig. 4(a), is used for a group communication within a group of UEs or vehicular entities, like UE1 to UE4 illustrated in Fig. 4(a) forming a group of UEs. The group communication within the group may be used to exchange data, for example to allow the respective UEs of the group to operate or function together in a closely linked manner, like in a platoon use case. The groupcast may also be referred to a multicast.
- The unicast, depicted in Fig. 4(b), is used by one vehicle or UE, like UE1 in Fig. 4(b) to establish a direct link exclusively with one other vehicle or UE, like UE2.
- The broadcast, depicted in Fig. 4(c), is the legacy mode of V2X communication in LTE where one UE, like UE1 in Fig. 4(c) transmits and all UEs in the proximity, like UE2 to UE5, receive the signal or data from $UE_1$. In other words, vehicles or UEs in the proximity of the transmitting UE receive or read or decode the broadcast data. Typically, in LTE all vehicles are receiving/transmitting messages periodically. Also aperiodic traffic may be supported on LTE sidelinks, and is also supported on NR sidelinks.

Other use cases in which a plurality of user devices may be grouped together for a sidelink communication among each other include, for example, factory automation and electrical power distribution. In the case of factory automation, a plurality of mobile or stationary machines within a factory may be equipped with user devices and grouped together for a sidelink communication, for example for controlling the operation of the machine, like a motion control of a robot. In the case of electrical power distribution, entities within the power distribution grid may be equipped with respective user devices which, within a certain area of the system may be grouped together so as to communicate via a sidelink communication with each other so as to allow for monitoring the system and for dealing with power distribution grid failures and outages.

It is noted that the information in the above section is only for enhancing the understanding of the background of the invention and, therefore, it may contain information that does not form prior art that is already know to a person of ordinary skill in the art.

Starting from the prior art as described above, there may be a need for improvement or enhancement in the sidelink communication.

Embodiments of the present invention are now described in further detail with reference to the accompanying drawings:

Fig. 1      shows a schematic representation of an example of a wireless communication system;

Fig. 2      is a schematic representation of an in-coverage scenario in which UEs directly communicating with each other are connected to a base station;

Fig. 3      is a schematic representation of an out-of-coverage scenario in which UEs directly communicating with each other receive no SL resource allocation configuration or assistance from a base station;

Fig. 4      illustrates different types of communication on a sidelink for a V2X communication;

Fig. 5      is a schematic representation of a wireless communication system including a transmitter, like a base station, and one or more receivers, like user devices, operating in accordance with the embodiments of the present invention;

Fig. 6      illustrates an embodiment of the present invention employing different resource pools, RPs for transmissions over a sidelink being associated with different QoS classes;

Fig. 7      illustrates an embodiment of resource pools configured in one bandwidth part BWP; and

Fig. 8      illustrates an example of a computer system, in which units or modules as well as the steps of method described in accordance with the inventive approach may execute.

Embodiments of the present invention are now described in more detail with reference to the accompanying drawings in which the same or similar elements have the same reference signs assigned.

In wireless communication systems or networks, like those described above with reference to Fig. 1, Fig. 2 or Fig.

3, a sidelink communication among respective user devices may be implemented, for example, a vehicle-to-vehicle communication, V2V, a vehicle-to-anything communication, V2X, or any device-to-device, D2D, communication among any user devices, for example among those mentioned above. NR V2X may cover a diverse range of use cases with stringent QoS requirements. Ranging from ultra-reliable low latency communication to high data rates, different use cases have associated therewith different QoS or service requirements. Dependent on the actual QoS requirements or QoS levels, the resources to be allocated for a communication being associated with a certain QoS requirement may differ. Due to the limited number of resources and the need to support different QoS requirements, the QoS requirements or QoS levels need to be considered when allocating resources for a sidelink communication, like a NR sidelink. For example, when considering LTE V2X, the resource allocation procedure is mainly based on the conventional methods or approaches considering the in-coverage scenario, supporting both a network controlled resource allocation (mode 3 or mode 1) as well as autonomous resource allocation (mode 4 or mode 2), and out-of-coverage scenarios which are limited to an autonomous resource allocation (mode 4 or mode 2). The conventional approach for allocating the resources includes a logical channel prioritization procedure, which may be applied in case a new transmission is performed, and each sidelink logical channel may have associated a certain priority or QoS class which refers to any kind of or any combination of QoS metric per-bearer and/or per-packet.

For NR V2X, one or more resource pools may be supported for a NR sidelink. A resource pool is a set of time and frequency resources that may be used for sidelink transmissions and/or receptions. A resource pool may include continuous or non-continuous resources in time and/or frequency. In other words, a resource pool may be a set of resources including a plurality of contiguous or non-contiguous resources across a frequency domain and adjacent or non-adjacent across a time domain. The resource pool may be inside the RF bandwidth of a UE, which is known by a base station, like a gNB, and other UEs. A resource pool may have a certain numerology that may be indicated as part of a configuration or a pre-configuration of the resource pool. When using a resource pool, a UE may assume a single numerology in the pool. Multiple resource pools may be configured to be used by a single UE in a given carrier which may be configured or pre-configured.

A bandwidth part, BWP, may be used to define at least a part of a resource pool, for example for a NR sidelink. A BWP may be configured in a carrier from a system perspective. An entire system bandwidth may be covered by a single BWP. In accordance with other examples, a plurality of BWPs may be configured, and a number of BWPs may be restricted, with each BWP having a certain, possibly different configuration. Different BWPs or a common BWP may be employed for the transmission and for the reception. In accordance with examples, there may be at most one activated sidelink BWP for a UE in a given carrier, like in the Uu case. In accordance with other examples, a sidelink BWP switching may be implemented allowing the UE to use different BWPs.

As mentioned above, QoS requirements for a communication may be considered for a sidelink communication, and the QoS achievable for a sidelink communication may depend on one or more of the priority, the latency, the reliability, the minimum required communication range, the resource allocation, the congestion control and the power control within the system. For example, the QoS management may include the use of priority information in the physical layer operation. For example, the PC5 QoS characteristics associated with the PC5 5QI, the 5G QoS indetifier, include the resource type, like GBR, delay cirtical GBR or non-GBR, GBR = guaranteed slow bitrate, guaranteed throughput, the priority level, the packet delay budget, the packet error rate, the average window for GBR and delay-critical GBR resource types, the maximum data burst volume for delay critical GBR resource type. A NR sidelink may allow a unicast communication from a UE to another UE, a groupcast communication or multicast communication from a UE to a plurality of other UEs, or a broadcast communication from one UE to all UEs. For example, higher layers may decide whether a unicast, groupcast or broadcast transmission is to be used for a particular data transfer and the physical layer is informed accordingly. When considering a unicast or groupcast transmission, the UE may determine which unicast or groupcast session a transmission belongs to.

When considering the above-summarized approaches, there may be certain problems or disadvantages associated with a resource allocation, for example in situations, in which the number of users using the sidelink resources is high so that a substantial number or all of the resources available for the sidelink communication are used by the current users. In such scenario, in which only a small amount or no resources for the sidelink are available, a UE wishing to transmit a message with a high QoS may be faced with a situation in which this is not possible, despite the fact that the QoS class is high, because there are simply not enough or no resources available. Also for UEs that may wish to transmit a message with a lower QoS level may experience an undesired delay in situations in which substantially all resources are used as in such cases when considering the QoS upon allocating resources, it may well be that other messages are prioritized over the low QoS message. This may be acceptable to a certain degree, however, it may lead to undesirable lengths of the delay in the transmission.

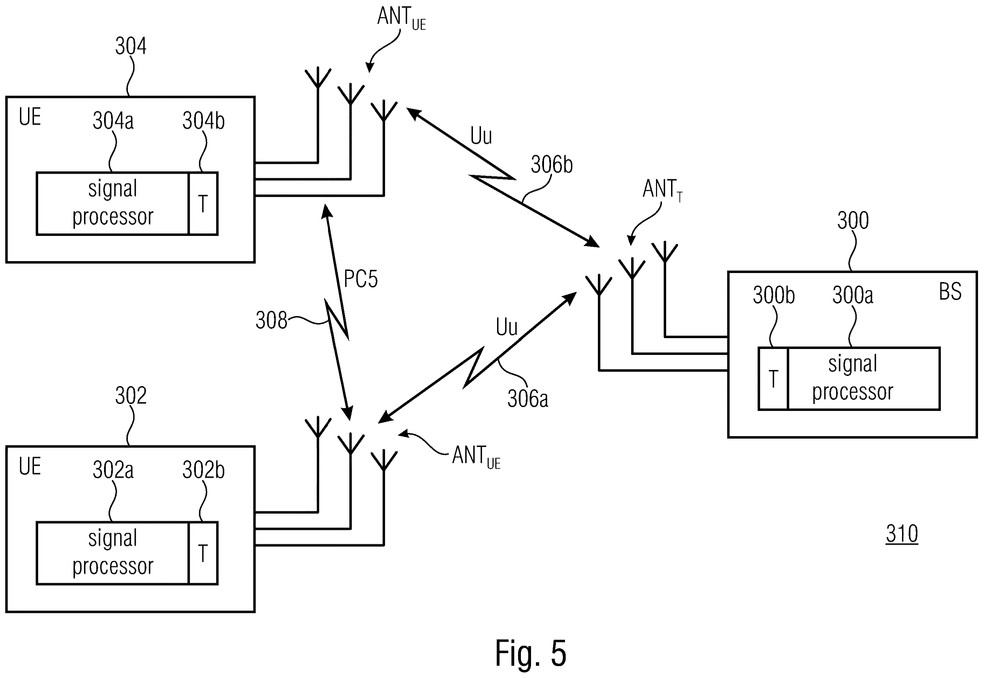

The present invention provides improvements and enhancements in a wireless communication system or network addressing the above-described problems, namely approaches for improving the resource allocation for a sidelink communication. Embodiments of the present invention may be implemented in a wireless communication system as depicted in Fig. 1, Fig. 2 or Fig. 3 including base stations and users, like mobile terminals or IoT devices. Fig. 5 is a schematic representation of a wireless communication system including a transmitter 300, like a base station, and one or more receivers 302, 304, like user devices, UEs. The transmitter 300 and the receivers 302, 304 may communicate via one or more wireless communication links or channels 306a, 306b, 308, like a radio link. The transmitter 300 may include one or more antennas $ANT_T$ or an antenna array having a plurality of antenna elements, a signal processor 300a and a transceiver 300b, coupled with each other. The receivers 302, 304 include one or more antennas $ANT_{UE}$ or an antenna array having a plurality of antennas, a signal processor 302a, 304a, and a transceiver 302b, 304b coupled with each other. The base station 300 and the UEs 302, 304 may communicate via respective first wireless communication links 306a and 306b, like a radio link using the Uu interface, while the UEs 302, 304 may communicate with each other via a second wireless communication link 308, like a radio link using the PC5/sidelink (SL) interface. When the UEs are not served by the base station, are not be connected to a base station, for example, they are not in an RRC connected state, or, more generally, when no SL resource allocation configuration or assistance is provided by a base station, the UEs may communicate with each other over the sidelink (SL). The system or network of Fig. 5, the one or more UEs 302, 304 of Fig. 5, and the base station 300 of Fig. 5 may operate in accordance with the inventive teachings described herein.

## WIRELESS COMMUNICATION SYSTEM

The present invention provides (see for example claim 1) a wireless communication system, comprising:

a plurality of user devices, UEs, wherein at least some of the UEs are configured for a sidelink communication, wherein the wireless communication system is configured to provide resources for the sidelink communication among the UEs, the resources comprising a plurality of sets of resources or resource pools, RPs, wherein the plurality of sets of resources or RPs includes at least a first set of resources or RP and a second set of resources or RP, the first set of resources or RP to be used for a transmission over the sidelink of a first message having a first Quality-of-Service, QoS, class, and the second set of resources or RP to be used for a transmission over the sidelink of a second message having a second QoS class, the first QoS class and the second QoS class being different.

In accordance with embodiments (see for example claim 2), the wireless communication system is configured to use or implement the respective RPs for transmissions of messages on the sidelink having a certain QoS class in case one or more specific or predefined conditions are fulfilled.

In accordance with embodiments (see for example claim 3), the wireless communication system is configured to not allow a transmission of messages on the sidelink having a certain QoS class in case one or more specific or predefined conditions are fulfilled.

In accordance with embodiments (see for example claim 4), the one or more specific or predefined conditions include:

-    a current or predicted QoS traffic of a certain class exceeds a configured or pre-configured threshold, and/or
-    one or more current or predicted network conditions for the sidelink exceed a configured or pre-configured threshold, and/or
-    one or more external or environmental conditions exist, and/or
-    a minimum required communication range, the minimum required communication range representing a communication range or a distance between the UEs required to meet or fulfill a certain QoS

In accordance with embodiments (see for example claim 5), the one or more network conditions include a current or predicted sidelink traffic load and/or a congestion of the sidelink resources, and wherein the one or more specific or predefined conditions include that the traffic load and/or the congestion exceeds one or more configured thresholds or one or more pre-configured thresholds.

In accordance with embodiments (see for example claim 6), the traffic load is derived from the Channel Busy Ratio, CBR, and / or the Channel Occupancy Ratio, CR.

In accordance with embodiments (see for example claim 7), in case of a congestion situation, certain QoS traffic, e.g., QoS classes with a priority lower than other QoS classes, are excluded from a transmission on the sidelink.

In accordance with embodiments (see for example claim 8), in case one or more of the external or environmental conditions exists, e.g., an emergency situation, the wireless communication system is configured to limit access to the sidelink resources to predefined QoS classes, e.g., only to the highest or the two or three highest QoS classes.

In accordance with embodiments (see for example claim 9), a value for the threshold is pre-configured or is set by a network operator

In accordance with embodiments (see for example claim 10), the wireless communication system is configured to associate resources to the respective RPs dependent on a traffic distribution per QoS class or on a percentage of the QoS classes in the traffic.

In accordance with embodiments (see for example claim 11), the wireless communication system is configured to monitor the one or more specific or predefined conditions, e.g., a certain load condition or congestion condition, prior to preparing a transmission of a message having a certain QoS class, and to allow the transmission in case the one or more specific or predefined conditions are fulfilled.

In accordance with embodiments (see for example claim 12), the wireless communication system is configured to run one or more applications, each application configured to provide a service with a predefined or requested Quality-of-Service, QoS, class.

In accordance with embodiments (see for example claim 13), the wireless communication system is configured to map a QoS class to one or more of the RPs such that messages or packets with the first QoS class, which is higher than the second QoS class, use one or more predefined or prioritized RPs from the plurality of the RPs.

In accordance with embodiments (see for example claim 14), the wireless communication system is configured to map a QoS class to one of the plurality of the RPs such that the higher the QoS of an entity (e.g., a QoS bearer, a message or a packet) is the more RPs are allocated, so that a delay for accessing an RP may be minimized for the high QoS due to the high number of accessible RPs.

In accordance with embodiments (see for example claim 15), the wireless communication system is configured to map a highest QoS class to all or some RPs to be allocated, and to map a lowest QoS class to a limited number of RPs.

In accordance with embodiments (see for example claim 16), the wireless communication system is configured to map

- the first QoS class, which is higher than the second QoS class, such that some or all RPs in one or multiple bandwidth parts, BWPs are accessed,
- any further QoS class such that all RPs are accessed, optionally excluding any RP exclusively reserved for first QoS class

In accordance with embodiments (see for example claim 17), the wireless communication system is configured to provide a plurality of first RPs to be exclusively used for the first QoS class only.

In accordance with embodiments (see for example claim 18), the wireless communication system is configured to provide the plurality of first RPs with limited resources, e.g., to be used for emergency or critical communications only.

In accordance with embodiments (see for example claim 19), the wireless communication system is configured to provide the plurality of first RPs with a high periodicity.

In accordance with embodiments (see for example claim 20), in case all resources from the one or more first RPs are used, the wireless communication system is configured to

- increase size of the first RP, and/or
- reserve the second RP for the first QoS class, and/or
- use a further RP within the same or a different bandwidth part, BWP

In accordance with embodiments (see for example claim 21), for x QoS classes, x being an integer, and QoS class x is the highest QoS class, QoS class x-1 is the second highest QoS class, and QoS class 0 is the lowest QoS class, and for y RPs, y being an integer and y > x, the wireless communication system is configured to map the QoS classes to the RPs as follows:

| QoS class | Access to RP# |
|---|---|
| x | all y RPs, where one RPs may be exclusively reserved for QoS class x |
| x-1 | y-1 RPs |
| x-2 | y-2 RPs |
| ... | ... |
| 0 | y-x RPs |

In accordance with embodiments (see for example claim 22), to map the QoS classes to the RPs, the wireless communication system is configured to consider one or more of the following factors:

- a current QoS class load/usage/distribution,
- traffic conditions/congestion,

- external/environmental conditions,
- a minimum required communication range, which may represent a communication range or a distance between the UEs required to meet or fulfill a certain QoS.

In accordance with embodiments (see for example claim 23), depending on the sidelink conditions or a traffic condition on the sidelink, the wireless communication system is configured to maintain the minimum communication range for one or more first QoS classes and reduce the minimum communication range for one or more second QoS classes being lower than the first QoS classes.

In accordance with embodiments (see for example claim 24), the wireless communication system is configured to change a mapping or the QoS classes to the RPs, wherein changing the mapping may be assisted by the UE or by the network.

In accordance with embodiments (see for example claim 25), in case of network assisted changing of the mapping, the wireless communication system is configured to change one or more network/preconfigured configurations as follows:

- use a pre-configuration of RPs, e.g., as defined for UEs being offline from the network or out-of-coverage,
- perform a network assisted change of the mapping on a long term basis, e.g., responsive to a RRC configuration that changes once the network sends a re-configuration.
- perform a gNB assisted change of the mapping, where the AS information, e.g., activation and deactivation, is updated by the gNB frequently so that the gNB may define or redefine the mapping tables.

In accordance with embodiments (see for example claim 26), in case of UE assisted changing of the mapping, the UE is configured to override the network/gNB/pre-configured mapping and to autonomously change the mapping according to one or more of the following factors:

- a current QoS class load/usage/distribution,
- traffic conditions/congestion,
- external/environmental conditions,
- a minimum required communication range, which may represent a communication range or a distance between the UEs required to meet or fulfill a certain QoS.

In accordance with embodiments (see for example claim 27),

the wireless communication system is configured to set a minimum required communication range, which represents a communication range or a distance between the UEs required to meet or fulfill a certain QoS, and dependent on the set minimum required communication range associated with the respective QoS classes, the wireless communication system is configured to adjust the transmit power, e.g., by reducing/increasing a maximum or a minimum transmit power dependent on a current setting of the minimum requested communication range.

In accordance with embodiments (see for example claim 28),

at least some of the UEs performing a sidelink communication form a group of UEs, and the wireless communication system is configured to provide the plurality of RPs for a groupcast communication among the UEs of the group, and wherein the QoS class to RP mapping is managed by a leader UE of the group or by a clustering head or by a scheduling UE is conveyed to leader UE via network control information.

In accordance with embodiments (see for example claim 29), the mapping and instructions to access the RPs related to the QoS class are conveyed to the member UEs of the group via sidelink control information.

In accordance with embodiments (see for example claim 30),

the RPs and the required QoS for a certain services are conveyed to the leader UE via the network or the base-station or the upper-layers or as a pre-configuration, and the leader UE is to distribute the mapped RPs to the member UEs of the group, wherein information between the leader UE and member UEs of the group may be conveyed by layer 1 signaling or by upper layer signaling, e.g., using RRC messages.

In accordance with embodiments (see for example claim 31), for adapting the mapping to changing network conditions, the leader UE periodically updates the group members, e.g., if a channel quality, like CQI, falls below a certain threshold, to maintain the QoS the leader UE may initiate, e.g., packet duplication and/or increase the transmit power within the group.

In accordance with embodiments (see for example claim 32), in case the group of UEs is completely out of coverage, the scheduling UE autonomously is configured to decide the mapping, e.g., using QoS information carried over the Physical Sidelink Channels, like the over Sidelink Control Channel in the Sidelink Control Information, by the leader UE to the member UEs.

In accordance with embodiments (see for example claim 33), in case a reliability and/or latency requirement is are not met, the leader UE is to instruct the member UEs to select more than one RP associated with the target QoS to be used for data duplication or wider band transmission.

In accordance with embodiments (see for example claim 34), during an occurrence of a handover, the leader UE is allowed to access a common RP, e.g., an exceptional pool, to distribute resources among the member UEs and to inform the member UEs about the handover and the possibly the new associated RP to be used.

In accordance with embodiments (see for example claim 35), the mapping of the RPs to the QoS classes is based on a bitmap identifying the RP within one or multiple bandwidth part(s), BWP, wherein the BWP may have one component carrier or multiple component carriers

In accordance with embodiments (see for example claim 36), in the case the UEs are out of coverage, the RP is configured either via an UE hardcoded configuration or a RRC-pre-configuration.

In accordance with embodiments (see for example claim 37), the sets of resources include resources, like resource elements or resource blocks, adjacent or non-adjacent across frequency, and contiguous or non-contiguous across time.

In accordance with embodiments (see for example claim 38), the sets of resources include resources of the same numerology or a plurality of groups of resources having different numerologies, like different subcarrier spacings, different slot lengths or different number of supported channels.

In accordance with embodiments (see for example claim 39), the subset of resources define respective resource pools or mini resource pools or a sub-pools.

In accordance with embodiments (see for example claim 40), the plurality of UEs comprises one or more in-coverage UEs and/or one or more out-of-coverage UEs.

In accordance with embodiments (see for example claim 41), the UE comprises one or more of a mobile terminal, or stationary terminal, or cellular IoT-UE, or vehicular UE, or an IoT or narrowband IoT, NB-IoT, device, or a ground based vehicle, or an aerial vehicle, or a drone, or a moving base station, or road side unit, or a building, or any other item or device provided with network connectivity enabling the item/device to communicate using the wireless communication network, e.g., a sensor or actuator.

In accordance with embodiments (see for example claim 42), the base station comprises one or more of a macro cell base station, or a small cell base station, or a central unit of a base station, or a distributed unit of a base station, or a road side unit, or a UE, or a remote radio head, or an AMF, or an SMF, or a core network entity, or a network slice as in the NR or 5G core context, or any transmission/reception point, TRP, enabling an item or a device to communicate using the wireless communication network, the item or device being provided with network connectivity to communicate using the wireless communication network.

## METHOD

The present invention provides (see for example claim 43) a method for operating a wireless communication system having a plurality of user devices, UEs, wherein at least some of the UEs are configured for a sidelink communication, the method comprising:

providing resources for the sidelink communication among the UEs, the resources comprising a plurality of sets of resources or resource pools, RPs,
wherein the plurality of sets of resources or RPs includes at least a first set of resources or RP and a second set of resources or RP, the first set of resources or RP to be used for a transmission over the sidelink of a first message having a first Quality-of-Service, QoS, class, and the second set of resources or RP to be used for a transmission over the sidelink of a second message having a second QoS class, the first QoS class and the second QoS class being different.

## COMPUTER PROGRAM PRODUCT

Embodiments of the present invention provide a computer program product comprising instructions which, when the program is executed by a computer, causes the computer to carry out one or more methods in accordance with the present invention.

Embodiments of the present invention provide various approaches or aspects for improving the resource allocation for transmissions over a sidelink in a wireless communication system. In accordance with embodiments of the present invention, the following definitions may be applied:

- Vehicle: This term is not limited to a vehicular entity or user entity, but includes any entity involved in a D2D/sidelink communication, for example an entity built in a vehicle, a pedestrian UE, a non-vehicular UE, an aerial UE, an IoT device and the like.
- Communication types: The communication types in V2X, namely broadcast, groupcast and unicast, discussed above with reference to Fig. 4.
- QoS class: The QoS class, also referred to as QoS characteristics or QoS parameters, refers to any kind and/or combination of QoS metrics per bearer and/or per packet. The QoS characteristics/QoS parameters may include one or more of the following:

  ○ For LTE: a latency, like the PPPP *(PPPP=ProSe Per-Packet Priority)*, or a reliability, like the PPPR *(PPPR=ProSe Per-Packet Reliability),*

  ○ For NR: the PC5 QoS characteristics associated with the PC5 5QI, like

    ▪ the resource type, GBR, delay critical GBR or non-GBR,
    ▪ priority level, for example for IRAT (IRAT=Inter-Radio Access Technology) the priority level matches the range of the LTE-based PPPP and is close to the definition of PPPP in LTE. For example, the LTE based PPPP can be mapped to the NR based priority in case to IRAT (LTE and NR) based V2X,
    ▪ packet delay budget,
    ▪ packet error rate,
    ▪ averaging window for GBR and delay-critical GBR resource types,
    ▪ maximum data burst volume for delay-critical GBR resource type.

- Minimum required communication range:

  ○ For groupcast a minimum required communication range may be used and defines a distance of vehicles within the same group.
  ○ For unicast the minimum required communication range may be a communication distance between the two involved UEs.
  The distance may be the radio distance, measured, for example in RSSI (Received Signal Strength Indicator), RSRP (Reference Signal Received Power), RSRQ (Reference Signal Received Quality) or any other pathloss parameter, or it may be the physical distance to a geographical location
  Within the minimum required communication range a defined reliability and/or latency is expected to be achieved

- Resource Pool (RP) or Physical Resource Pool: A time/frequency based resource. One or more multiple RPs may be associated with a bandwidth part, BWP. A vehicle UE may be configured to use one or more BWPs and/or one or more RPs.
  The different RPs may be associated with one or more different communication types, for example

  ○ one or more separate resource pools may be employed for each communication type, namely broadcast, groupcast and unicast,
  ○ for the groupcast and for the unicast one or more common resource pools may be used, the common resource pools being different or separate from the one or more resource pools used for the broadcast,
  ○ all communication types use the same one or more resource pools, i.e., one or more resources pools are provided for the sidelink communication and the resources are employed for broadcast, groupcast or unicast.

In accordance with embodiments of the present invention, to address problems encountered in conventional approaches, a QoS based resource allocation considering the QoS metrics and communication types is taught. In accordance with embodiments, a QoS class may be mapped to one or more RPs. This is advantageous as it allows packets or messages having a higher QoS class than other messages to use prioritized RPs. For example, the higher the QoS class is the more RPs may be allocated with a minimum delay. This is advantageous as the highest QoS class may employ some or all of the RPs for allocating resources, while the lowest QoS class has imposed the strictest limitation and may employ only a limited number of RPs. For example, a highest QoS class may access some or all RPs, for example in one or more multiple BWPs, while a second highest QoS class may access all RPs excluding the RP exclusively reserved for the highest QoS. For example, one or more RPs may be exclusively allowed to be used only for the highest QoS class or the highest QoS classes, like highest two or highest third QoS classes. The exclusive RPs may provide limited resources that may be used, for example, for emergency or other critical communication only which may require limited data rates.

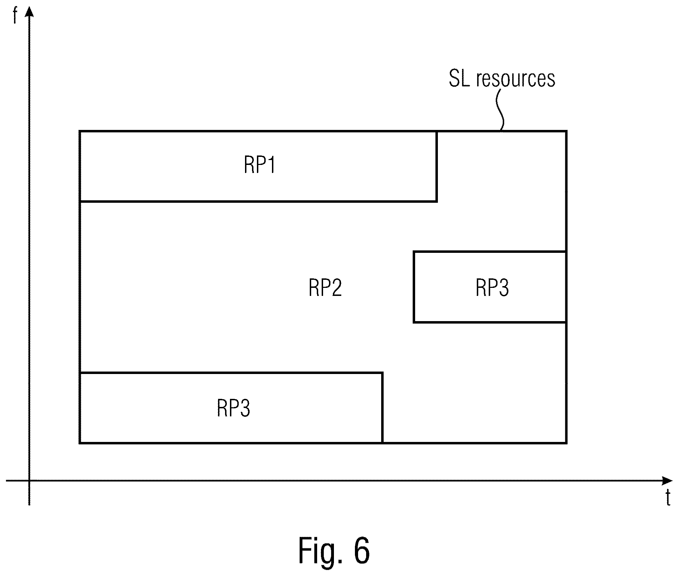

Fig. 6 illustrates an embodiment of the present invention employing different resource pools, RPs, for transmissions over a sidelink being associated with different QoS classes. Fig. 6 illustrates the sidelink resources, namely the time/frequency resources provided by the wireless communication system for communications over the sidelink, and within these sidelink resources a plurality of resource pools are defined. In the embodiment of Fig. 6, three resource pools RP1 to RP3 are shown. Resource pool RP1 may be used for transmissions over the sidelink having the highest QoS class, while the resources in RP2 may be used for transmissions having lower QoS classes, like the second highest QoS class. A third resource pool RP3 may be provided for transmissions having the lowest QoS class. As may be seen from Fig. 6, the resource pools may be continuous in time/frequency, like RP1 and RP2, or non-continuous in time/frequency, like RP3.

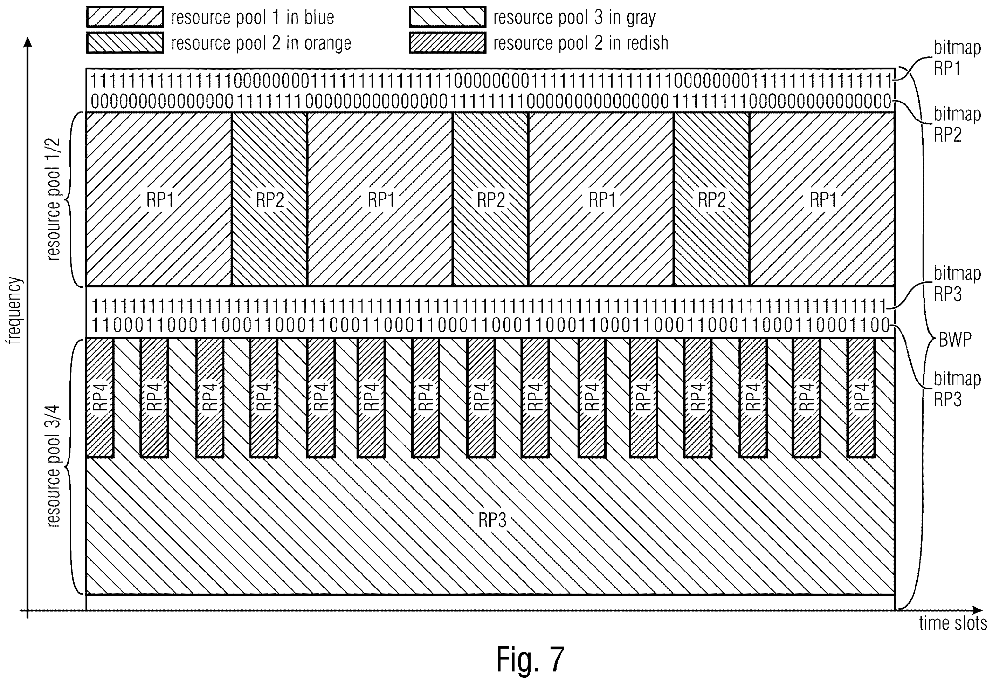

Fig. 7 illustrates an embodiment of resource pools configured in one bandwidth part BWP. In an upper part of the BWP the resource pools RP1 and RP2 are located, and in the lower part of the BWP the resource pools RP3 and RP4 are located. For example, when considering the lower part of the bandwidth part, more specifically the part including resource pools RP3 and RP4, Fig. 7 illustrates an embodiment using multiple small-sized RPs, namely RP4, which may be applicable for the highest QoS. In accordance with embodiments, RP4 may either preempt or reserve the resources from RP3. In accordance with embodiments, in case transmissions associated with a highest QoS class are ongoing, a size of a RP associated with this class may be increased, or a second RP for example the RP used for the next highest QoS class, may be reserved also for the highest QoS class, or a RP within a different BWP may be used.

In accordance with embodiments, the mapping of the QoS to an RP index, $RP_y$, within a BWP index, $BWP_i$, may be expressed as follows:

$$QoS_x = f(BWP_i, RP_y) \qquad\qquad (1)$$

where, $Q = f(B, R)$ is a mapping function such that $f^1(Q) = \{B, R\}$ always exists. For only one BWP, this applies:

$$QoS_x = f(RP_y) \qquad\qquad (2)$$

where, $Q = f(R)$ is a mapping function such that $f^1(Q) = R$ always exists.

For example, when assuming x QoS classes, with

- x = highest QoS class,
- x-1 = second highest QoS class,
- ...
- 0 = lowest QoS class, and

when considering y V2X RPs, that may be within a bandwidth part, with y > x or y = x, the association of resource pools and QoS classes may be as shown in the following table.

| QoS class | Access to RP# (optional: within BWP) |
|---|---|
| x | all y RPs, where one RPs may be exclusively reserved for QoS class x |
| x-1 | y-1 RPs |
| x-2 | y-2 RPs |
| ... | ... |
| 0 | y-x RPs |

In accordance with the embodiment depicted in Table 1, the highest QoS class x may access all y RPs, and one or more RPs may be reserved for exclusive use for the QoS class x. The second highest QoS class x-1 may access y-1 RPs and so on.

For example, when considering 10 QoS classes with class 0 having the highest priority and class 9 having the lowest priority, and a total of 10 RPs within the bandwidth part the association of the QoS classes and the RPs may be as shown in the table below.

| QoS class | Access to RP# (optional: within BWP) |
|---|---|
| 0 (highest prio) | 0 to 9 (unlimited) |
| 1 | 1 to 9 (as RP 0 reserved for QoS class 0 only |
| 2 | 2 to 9 |
| ... | ... |
| 9 (lowest prio) | 9 only |

In Table 2, the highest QoS class 0 has access to all RPs 0-9, i.e., unlimited access, and RP 0 may be reserved for the QoS class 0 only. The second highest QoS class 1 may access RP 1 to RP 9, and the third highest QoS class 2 may only access RP2 to RP9. The QoS class 0 having the lowest priority may only access the RP 9. Thus, in accordance with the embodiment described above with reference to Tables 1 and 2, dependent on the priority associated with a certain class the number of accessible RPs decreases with a decrease in the priority. Among the RPs, for one or more QoS classes, like the highest one or the highest one and the second highest one, a certain RP may be reserved that may not be accessed by communications having associated lower QoS classes. Stated differently, the above-mentioned QoS classes may include so-called a combined or similar QoS class in which one or more QoS classes, like a highest and a second highest QoS class, are combined, which may reduce the complexity.

The above-described embodiments suggest associating respective resource pools or sets of resources for a sidelink communication to certain QoS classes which is advantageous as it ensures that for higher QoS classes sufficient resources are available that are not used up by lower QoS classes as they are restricted to a lower number of RPs as explained above with reference to Tables 1 and 2. While this embodiment is advantageous as it ensures that transmissions with a high QoS class are reliably allocated with resources for the transmission, in case the load or the traffic is low in the system, restricting lower QoS messages to a certain resource pool may leave other resources that are located in resource pools not accessible for such transmissions unused. For example, in case there are not any or only a low number of the high QoS class transmissions, a substantial number of resources located in the reserved resource pool for such resources remain unused.

Therefore, in accordance with further embodiments, the above-described concept of assigning resource pools to certain quality of class transmissions may be employed in case a traffic situation or load situation requires this, for example in case the traffic or load, like the congestion in the system or on the SL, exceeds a certain level of threshold. In other words, the association of QoS traffic to a resource pool only applies when the traffic load exceeds one or more configured thresholds or one or more pre-configured thresholds, also referred to as load thresholds. As long as the load threshold(s) are not exceeded the association QoS traffic on resource pool does not apply. For example, in case the system determines that the number of transmissions is below a certain threshold, all resources from all resource pools may be made available for a transmission independent of the QoS class. However, once the system gets congested, i.e., more UEs communicate over the sidelink, or in case a certain event occurs, like an emergency situation or the need to transmit a highly critical message, like in a platooning scenario, the system may employ the above scheme and allow access to certain resource pools only for certain messages, like emergency messages or the like. In other words, in accordance with further embodiments, the mapping and/or association of the QoS traffic to the respective RPs, also referred to as the QoS class RP mapping, may be applied dependent on specific conditions, responsive to which the QoS class RP mapping may be initiated. In the following, embodiments initiating the QoS class RP mapping are described.

In accordance with an embodiment, a current QoS class usage or traffic load may be considered. For example, one or more thresholds with regard to the usage or the load in the system may be set, for example, by the network operator, or may be pre-configured so that once these thresholds are exceeded the QoS class RP mapping as described above may be initiated.

In accordance with another embodiment, a current or future sidelink traffic or usage or load of a specific RP may be considered. For example, the traffic load may be derived from the channel busy ration, CBR, and/or the channel occupancy ratio, CR. One or more thresholds with regard to the sidelink traffic conditions may be set, for example, by the network operator, or may be pre-configured, so that once these thresholds are exceeded, for example in case a specific RP traffic or a traffic on the sidelink exceeds the thresholds, the QoS class RP mapping may be initiated. The future sidelink traffic or future specific RP traffic may be predicted using different prediction functionalities.

In accordance with yet other embodiments, the traffic distribution per QoS class may be considered for initiating the QoS class RP mapping. For example, the association or mapping of QoS class traffic to RPs may be derived from the distribution or percentage of a certain QoS class traffic. For example, the following distribution of a current or future traffic may be assumed:

- the percentage of the highest QoS priority class in the communication may be 30%,

- the percentage of the 2nd highest QoS priority class in the communication may be 20%,
- ...

In such a case, the following QoS class RP mapping may be applied. At least 30% of the resources available for the sidelink may be associated with a high priority set of resource pool(s) to be used by the highest QoS priority class only, in case QoS class RP mapping is initiated. A least 20% of the resources may be mapped to the second highest QoS priority class, in case QoS class RP mapping is initiated. The remaining lower priority classes may share the remaining resources, i.e., the remaining 50% of the resources. Optionally, two or more priority classes, like the highest and the second highest class or the second highest and the third highest class, may share a common set of reserved resources. In accordance with embodiments, thresholds, like the threshold(s) for the load, the traffic conditions and the like, as discussed above, may be used to control the association of QoS traffic to the resource pools.

In accordance with further embodiments, the network traffic conditions or the network congestion may be employed to decide whether the QoS class RP mapping is to be initiated or not. For example, one or more thresholds with regard to the network traffic may be set up, for example by an operator, or may be pre-configured so that responsive to exceeding such thresholds, the QoS class RP mapping may be initiated. For example, in case of a certain congestion level, a more restrictive mapping may apply, for example QoS classes with low or lower priority may even be temporarily excluded from transmissions.

In accordance with other embodiments, external or environmental conditions are considered for deciding about the QoS class RP mapping. For example, in case of an emergency, access to resources may be limited to the highest or to the second and third highest QoS classes only.

In accordance with embodiments the minimum required communication range may be considered for employing the QoS RP mapping. Dependent on the sidelink or traffic conditions, a minimum communication range for the lower QoS classes may be restricted, while the minimum communication range stays the same or remains unchanged for higher QoS classes.

In accordance with embodiments, the QoS class RP mapping may be assisted or supported by the network or by the UE. For example, responsive to meeting one of the above-described conditions, the network entities may configure the mapping as follows:

- Use a pre-configuration, e.g., in case the network is offline or in case of an out-of-coverage scenario, for the QoS class RP mapping, like pre-configured RPs and a pre-configured mapping of QoS classes to such RPs.
- Use a network assisted activation using an RRC configuration that may be applied once the network sends a re-configuration message.
- Use gNB assisted activation using a configuration defined by the gNB and AS information for the activation and deactivation. This allows the gNB to update the configuration.

In case of a UE assisted configuration, the UE may override the network/gNB/pre-configured configuration by changing the configuration autonomously, for example responsive to one or more of the above-described conditions responsive to which the QoS class RP mapping is to be initiated.

In accordance with embodiments of the present invention, the permission to access a resource pool is implicitly provided using the above-described mechanisms, i.e., once the QoS class RP mapping is initiated, the access to a certain resource pool is allowed in case a QoS class of a packet to be transmitted matches the QoS class for which the RP is to be used. The QoS based resource allocation procedures may deny access to the network and/or to network resources, for example to one or any resource pool for a sidelink or a Uu link in case a RP access permission threshold is exceeded, which may be predefined or pre-configured. The threshold may be used to supervise or monitor the load condition prior to allowing/configuring/setting up a new data transmission/data packet/link. This may be performed prior to starting the resource allocation procedure including the sensing. A current load, for example, based on the CBR, is compared with the admission control threshold considering the QoS class of the data to be transmitted. For example, dependent on a pre-configured value x starting from the lowest QoS class to higher QoS classes, traffic flows with the lowest x QoS classes may be restricted from accessing the link or the cell or the network. In one scenario, only the highest QoS class is admitted to ask for resources, in case the threshold is exceeded.

In accordance with other embodiments, rather than using a single threshold also multiple thresholds may be applied so that for different levels of traffic flow, with an increase in traffic, a lower number of QoS classes may get the admission to ask for resources.

In accordance with yet other embodiments, dependent on the time the admission control is exceeded, more QoS classes may be denied from accessing the resources or the network. The admission control may support QoS management, for example a V2X service may only be activated when the required QoS may be fulfilled.

In accordance with further embodiments, the QoS based resource pools may be associated with the transmit power. For example, in addition to the QoS based RP configuration as described above, the resource pool may be further impacted by the minimum required communication range parameter. Dependent on a minimum required communication range, the transmit power may be optimized. For example, the maximum transmit power may be reduced or increased dynamically dependent on the current setting of the minimum requested communication range. This includes the setting of the sidelink specific transmit power reduction parameter.

In the following, embodiments for group communication or groupcast are described. For a groupcast, it is typically assumed that a group leader UE or a scheduling UE exists, and the QoS class to RP mapping may be managed by the leader or scheduling UE and may be conveyed to the scheduling UE via the network control information. The mapping and instructions to access the RPs related with a certain QoS class may be conveyed to the member UEs via the sidelink control information, SCI. In accordance with embodiments, resource pools for the required QoS of a certain service may be conveyed to the scheduling UE via the network or via the base station or via upper layers or as a pre-configuration. The scheduling UE may distribute the mapped resource pools to the group members and information between the scheduling UE and the group members may be conveyed by layer 1 signaling or upper layer signaling, like RRC messages.

For adapting to changing network conditions, in accordance with embodiments, the scheduling may periodically update the group members. In case the channel quality, like the CQI, falls below a certain threshold, to maintain the QoS, the scheduling UE may initiate for example packet duplication and/or may increase the transmit power within the group.

In case the group of UEs is completely in an out-of-coverage scenario, the scheduling UE may autonomously decide the QoS class RP mapping or may use a pre-configured configuration for this mapping. The required QoS information may be carried over the physical sidelink channels, like the sidelink control channel in the sidelink control information by the scheduling UE to the other group members. For example, in case the reliability and/or latency requirements are not met, the scheduling UE may instruct the group members to select more than one resource pool associated with a target QoS to be used for the data duplication or wideband transmission. For example, in case the number of resource pools available for the application or the wider band transmission is not sufficient, the scheduling UE may remap the remaining pools to the required QoS. For the remapped resource pools, the scheduling UE may instruct the group members once again by those remapped resource pools.

In accordance with further embodiments, during the occurrence of a handover, a group leader UE or scheduling UE may be allowed to access a common pool, for example an exceptional pool, and distribute the resources among the group members. The UE may inform, for example, the group members about the handover and the possibly new associated RP to be used.

In accordance with yet further embodiments, the QoS class RP mapping may be based on the NR numerologies. For example, mapping of the RPs to the bit index may be based on the quality of service. For example, Fig. 7 illustrates the mapping of the RPs to the bit index, more specifically the bitmap used to identify within the BWP. In Fig. 7 the bitmap for RP1 and the bitmap for RP2 which are located in the upper part of the BWP indicate that the resource pools RP1 and RP2 are separate from each other. On the other hand, the resource pool RP3 includes the entire lower part of the bandwidth part as illustrated by the bitmap for RP3, however, within this part some resources are preempt or reserved as RP4 as indicated by bitmap RP4 in Fig. 7. The BWP may have one component carrier or multiple component carriers. In case of an out-of-coverage scenario, the resource pool may be configured either via the UE hardcoded configuration or via an RRC pre-configuration.

In some of the embodiments described above, reference has been made to respective vehicles being either in a mode in which SL resource allocation configuration or assistance is provided by a base station, e.g., the connected mode, also referred to as mode 1 or mode 3 configuration, or vehicles being in a mode in which when no SL resource allocation configuration or assistance is provided by a base station, e.g., the idle mode, also referred to as mode 2 or mode 4 configuration. However, the present invention is not limited to V2V communications or V2X communications, rather it is also applicable to any device-to-device communications, for example non-vehicular mobile users or stationary users that perform a sidelink communication, e.g., over the PC5 interface. Also, in such scenarios, the inventive aspects described above may be employed.

In accordance with embodiments, the wireless communication system may include a terrestrial network, or a non-terrestrial network, or networks or segments of networks using as a receiver an airborne vehicle or a spaceborne vehicle, or a combination thereof.

In accordance with embodiments, a receiver may comprise one or more of a mobile or stationary terminal, an IoT device, a ground-based vehicle, an aerial vehicle, a drone, a building, or any other item or device provided with network connectivity enabling the item/device to communicate using the wireless communication system, like a sensor or actuator. In accordance with embodiments, a transmitter may comprise one or more of a macro cell base station, or a small cell base station, or a spaceborne vehicle, like a satellite or a space, or an airborne vehicle, like a unmanned aircraft system (UAS), e.g., a tethered UAS, a lighter than air UAS (LTA), a heavier than air UAS (HTA) and a high altitude UAS platforms (HAPs), or any transmission/reception point (TRP) enabling an item or a device provided with network connectivity to communicate using the wireless communication system.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

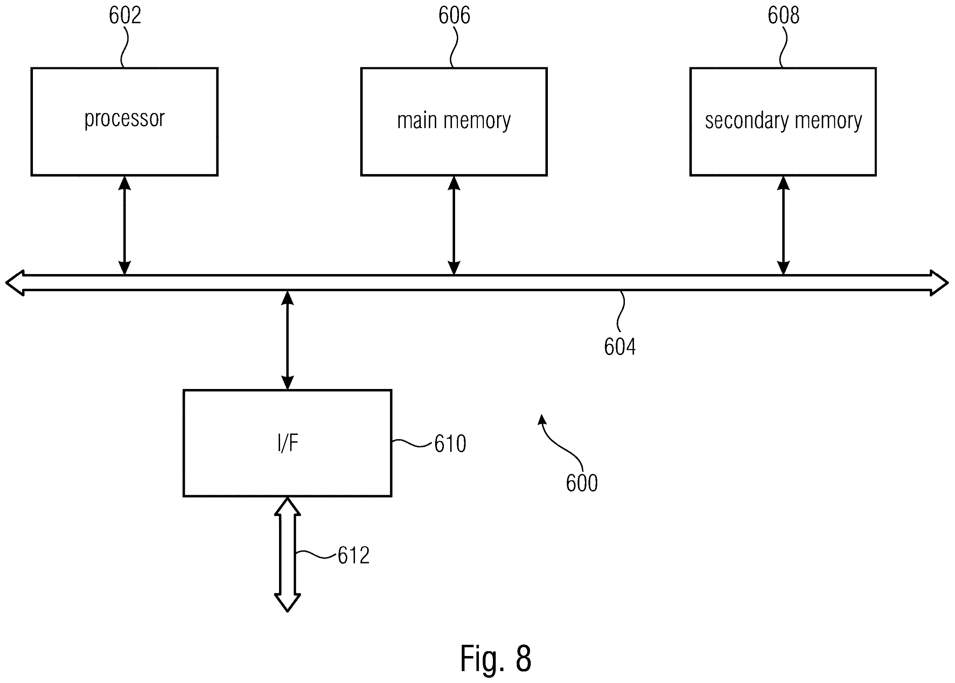

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 8 illustrates an example of a computer system 600. The units or modules as well as the steps of the methods performed by these units may execute on one or more computer systems 600. The computer system 600 includes one or more processors 602, like a special purpose or a general purpose digital signal processor. The processor 602 is connected to a communication infrastructure 604, like a bus or a network. The computer system 600 includes a main memory 606, e.g., a random-access memory (RAM), and a secondary memory 608, e.g., a hard disk drive and/or a removable storage drive. The secondary memory 608 may allow computer programs or other instructions to be loaded into the computer system 600. The computer system 600 may further include a communications interface 610 to allow software and data to be transferred between computer system 600 and external devices. The communication may be in the from electronic, electromagnetic, optical, or other signals capable of being handled by a communications interface. The communication may use a wire or a cable, fiber optics, a phone line, a cellular phone link, an RF link and other communications channels 612.

The terms "computer program medium" and "computer readable medium" are used to generally refer to tangible storage media such as removable storage units or a hard disk installed in a hard disk drive. These computer program products are means for providing software to the computer system 600. The computer programs, also referred to as computer control logic, are stored in main memory 606 and/or secondary memory 608. Computer programs may also be received via the communications interface 610. The computer program, when executed, enables the computer system 600 to implement the present invention. In particular, the computer program, when executed, enables processor 602 to implement the processes of the present invention, such as any of the methods described herein. Accordingly, such a computer program may represent a controller of the computer system 600. Where the disclosure is implemented using software, the software may be stored in a computer program product and loaded into computer system 600 using a removable storage drive, an interface, like communications interface 610.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

**Claims**

1. A wireless communication system, comprising:

a plurality of user devices, UEs, wherein at least some of the UEs are configured for a sidelink communication, wherein the wireless communication system is configured to provide resources for the sidelink communication among the UEs, the resources comprising a plurality of sets of resources or resource pools, RPs, wherein the plurality of sets of resources or RPs includes at least a first set of resources or RP and a second set of resources or RP, the first set of resources or RP to be used for a transmission over the sidelink of a first message having a first Quality-of-Service, QoS, class, and the second set of resources or RP to be used for a transmission over the sidelink of a second message having a second QoS class, the first QoS class and the second QoS class being different, wherein the wireless communication system is configured to not allow a transmission of messages on the sidelink having a third QoS class on the first set of resources in case one or more specific or predefined conditions are fulfilled, wherein the specific or predefined conditions include a minimum required communication range, the minimum required communication range representing a communication range or a distance between the UEs required to meet or fulfill a certain QoS.

2. The wireless communication system of claim 1,wherein the wireless communication system is configured to use or implement the respective RPs for transmissions of messages on the sidelink having a certain QoS class in case one or more specific or predefined conditions are fulfilled.

3. The wireless communication system of any one of the preceding claims, wherein the distance is estimated with a RSSI, Received Signal Strength Indicator, or a RSRP, Reference Signal Received Power, or a RSRQ, Reference Signal Received Quality, or a physical distance to a geographical location.

4. The wireless communication system of claim 2 or 3, wherein the one or more specific or predefined conditions include:

- a current or predicted QoS traffic of a certain class exceeds a configured or pre-configured threshold, and/or
- one or more current or predicted network conditions for the sidelink exceed a configured or pre-configured threshold, and/or
- one or more external or environmental conditions exist.

5. The wireless communication system of claim 4, wherein the one or more network conditions include a current or predicted sidelink traffic load and/or a congestion of the sidelink resources, and wherein the one or more specific or predefined conditions include that the traffic load and/or the congestion exceeds one or more configured thresholds or one or more pre-configured thresholds.

6. The wireless communication system of claim 5, wherein the traffic load is derived from the Channel Busy Ratio, CBR, and / or the Channel Occupancy Ratio, CR.

7. The wireless communication system of claim 5 or 6, wherein, in case of a congestion situation, certain QoS traffic, e.g., QoS classes with a priority lower than other QoS classes, are excluded from a transmission on the sidelink.

8. The wireless communication system of any one of claims 3 to 7, wherein, in case one or more of the external or environmental conditions exists, e.g., an emergency situation, the wireless communication system is configured to limit access to the sidelink resources to predefined QoS classes, e.g., only to the highest or the two or three highest QoS classes.

9. The wireless communication system of any one of claims 3 to 8, wherein a value for the threshold is pre-configured or is set by a network operator.

10. The wireless communication system of any one of the preceding claims, wherein the wireless communication system is configured to monitor the one or more specific or predefined conditions, e.g., a certain load condition or congestion condition, prior to preparing a transmission of a message having a certain QoS class, and to allow the transmission in case the one or more specific or predefined conditions are fulfilled.

11. The wireless communication system of any one of the preceding claims, wherein the wireless communication system is configured to run one or more applications, each application configured to provide a service with a predefined or requested Quality-of-Service, QoS, class.

12. The wireless communication system of any one of the preceding claims, wherein the wireless communication system is configured to map a QoS class to one or more of the RPs such that messages or packets with the first QoS class, which is higher than the second QoS class, use one or more predefined or prioritized RPs from the plurality of the RPs.

13. The wireless communication system of any one of the preceding claims, wherein the wireless communication system is configured to map a QoS class to one of the plurality of the RPs such that the higher the QoS of an entity (e.g., a QoS bearer, a message or a packet) is the more RPs are allocated, so that a delay for accessing an RP may be minimized for the high QoS due to the high number of accessible RPs.

14. The wireless communication system of any one of the preceding claims, wherein, to map the QoS classes to the RPs, the wireless communication system is configured to consider one or more of the following factors:

   - a current QoS class load/usage/distribution,
   - traffic conditions/congestion,
   - external/environmental conditions,
   - a minimum required communication range, which may represent a communication range or a distance between the UEs required to meet or fulfill a certain QoS.

15. The wireless communication system of claim 14, wherein, depending on the sidelink conditions or a traffic condition on the sidelink, the wireless communication system is configured to maintain the minimum communication range for one or more first QoS classes and reduce the minimum communication range for one or more second QoS classes being lower than the first QoS classes.

16. The wireless communication system of any one of the preceding claims, wherein, in case of UE assisted changing of the mapping, the UE is configured to override the network/gNB/pre-configured mapping and to autonomously change the mapping according to one or more of the following factors:

   - a current QoS class load/usage/distribution,
   - traffic conditions/congestion,
   - external/environmental conditions,
   - a minimum required communication range, which may represent a communication range or a distance between the UEs required to meet or fulfill a certain QoS.

17. The wireless communication system of any one of the preceding claims,

   wherein at least some of the UEs performing a sidelink communication form a group of UEs, and the wireless communication system is configured to provide the plurality of RPs for a groupcast communication among the UEs of the group, and
   wherein the QoS class to RP mapping is managed by a scheduling UE and is conveyed to the scheduling UE via network control information.

18. The wireless communication system of claim 17, wherein the mapping and instructions to access the RPs related to the QoS class are conveyed to the member UEs of the group via sidelink control information.

19. The wireless communication system of any one of the preceding claims, wherein, during an occurrence of a handover, the leader UE is allowed to access a common RP, e.g., an exceptional pool, to distribute resources among the member UEs and to inform the member UEs about the handover and the possibly the new associated RP to be used.

20. A method for operating a wireless communication system having a plurality of user devices, UEs, wherein at least some of the UEs are configured for a sidelink communication, the method comprising:

   providing resources for the sidelink communication among the UEs, the resources comprising a plurality of sets of resources or resource pools, RPs,
   wherein the plurality of sets of resources or RPs includes at least a first set of resources or RP and a second set of resources or RP, the first set of resources or RP to be used for a transmission over the sidelink of a first message having a first Quality-of-Service, QoS, class, and the second set of resources or RP to be used for a transmission over the sidelink of a second message having a second QoS class, the first QoS class and the second QoS class being different,

wherein the method comprising not allowing a transmission of messages on the sidelink having a third QoS class on the first set of resources in case one or more specific or predefined conditions are fulfilled, wherein the specific or predefined conditions include a minimum required communication range, the minimum required communication range representing a communication range or a distance between the UEs required to meet or fulfill a certain QoS.

21. A user device, UE, for a wireless communication system, the wireless communication system including one or more further user devices, UEs,

the UE is configured for a sidelink communication with one or more of the further devices, UEs, using resources provided by a base station of the wireless communication system for the sidelink communication among the UEs, the resources comprising a plurality of sets of resources or resource pools, RPs, wherein the plurality of sets of resources or RPs includes at least a first set of resources or RP and a second set of resources or RP, wherein the UE is to use

- the first of resources or RPs for a transmission over the sidelink of a first maessage having a first Quality of Service, QoS, class, and
- the second set of resources or RP for a transmission over the sidelink of a second message having a second QoS class, the first QoS class and the second QoS class being different

wherein the UE is to not allow a transmission of messages on the sidelink having a third QoS class on the first set of resources in case one or more specific or predefined conditions are fulfilled, wherein the specific or predefined conditions include a minimum required communication range, the minimum required communication range representing a communication range or a distance between the UEs required to meet or fulfill a certain QoS.

22. A non-transitory computer program product comprising a computer readable medium storing instructions which, when executed on a computer, perform the method of claim 20.

Fig. 1(a)

Fig. 1(b)

Fig. 2

Fig. 3

Fig. 4(a)
groupcast

Fig. 4(b)
unicast

Fig. 4(c)
broadcast

Fig. 5

Fig. 6

Fig. 7

EP 4 657 977 A2

**Fig. 8**